# EUROPÄISCHE PATENTSCHRIFT

(11) **EP 2 376 799 B1**
(45) Veröffentlichungstag und Bekanntmachung des Hinweises auf die Patenterteilung: **30.05.2018**
(21) Anmeldenummer: 09768017.7
(22) Anmeldetag: 02.12.2009
(51) Int. Cl.: F16C 31/04, F16C 35/067, F16H 63/30

(54) **SCHALTDOMBAUEINHEIT SOWIE VERFAHREN ZUM FESTLEGEN EINER LAGERVORRICHTUNG IN EINER SCHALTDOMBAUEINHEIT**
GEARSHIFT DOME UNIT AND METHOD OF FIXING A BEARING ARRANGEMENT IN A GEARSHIFT DOME UNIT
MODULE TOURELLE DE SÉLECTION ET PROCÉDÉ DE MONTAGE D'UN SYSTÈME DE PALIER DANS UN MODULE TOURELLE DE SÉLECTION

(30) Priorität: 11.12.2008 DE 102008061888
(43) Veröffentlichungstag der Anmeldung: 19.10.2011
(73) Patentinhaber: Schaeffler Technologies AG & Co. KG, 91074 Herzogenaurach (DE)
(72) Erfinder: BECK, Tino, 96138 Burgebrach (DE); JAUERNIG, Dieter, 91074 Herzogenaurach (DE); MAIER, Waldemar, 91074 Herzogenaurach (DE)
(86) Internationale Anmeldenummer: PCT/EP2009/066197
(87) Internationale Veröffentlichungsnummer: WO 2010/066614

(56) Entgegenhaltungen:
- EP-A1- 1 188 941
- DE-A1- 4 421 534
- DE-A1- 10 008 872
- DE-A1-102005 003 753
- JP-U- 63 162 129

## Beschreibung

Die Erfindung betrifft eine Schaltdombaueinheit, aufweisend ein Schaltdomgehäuse, eine Schaltwelle und eine Lageranordnung zur Lagerung der Schaltwelle, wobei die Lageranordnung versehen ist mit einer Lagervorrichtung, wobei die Lagervorrichtung zur schwenkbaren und/oder verschiebbaren Lagerung der Welle ausgebildet ist, mit einem Aufnahmeabschnitt, wobei die Lagervorrichtung in einer Aufnahme des Aufnahmeabschnitts angeordnet ist, mit einem Rückhalteelement, wobei das Rückhalteelement angeordnet und/oder ausgebildet ist, ein Herauswandern der Lagervorrichtung aus der Aufnahme zu verhindern, und mit einer Halterung für das Rückhalteelement. Die Erfindung betrifft im Weiteren ein Verfahren zum Festlegen einer Lagervorrichtung in einer solchen Schaltdombaueinheit. Lager werden eingesetzt, um bewegbare Bauteile, wie zum Beispiel Wellen, schwenkbar, drehbar und/oder verschiebbar zu lagern. Damit die bewegbaren Bauteile ausreichend durch die Lager in den Belastungsrichtungen gestützt sind, ist es unumgänglich, auch die Lager entsprechend fest in eine Umgebungskonstruktion einzubinden, da ansonsten im Betrieb zunächst das Lager seine definierte Position und als Folge das bewegbare Bauteil seine konstruktive Stütze verliert.
Die Druckschrift DE 402 55 05 A1 betrifft beispielsweise ein Getriebegehäuse in Kunststoffspritzgussbauweise mit mehreren Lagern, über die Wellen drehbar abgestützt sind. Mit dem Ziel, die Lager mechanisch stabil in dem Getriebegehäuse einzubringen, wird ein metallisches Präzisionseinlegeteil bei der Fertigung mit eingespritzt, um die Lager voneinander auf einem definierten und konstanten Achsabstandsmaß zu halten. In der Offenlegungsschrift wird beschrieben, dass Wälzlageraußenringe der Lager direkt mit Kunststoff umspritzt sind, so dass eine teure Lagersitzbearbeitung und eine axiale Sicherung der Lager entfällt. Diese Offenlegungsschrift wird als nächstkommender Stand der Technik angesehen. Weiterhin offenbart die Druckschrift DE 10 08 872 A1 eine Lagerung einer Schaltwelle.

### Beschreibung der Erfindung

Es ist die Aufgabe der vorliegenden Erfindung, eine Schaltdombaueinheit und ein Fertigungsverfahren vorzuschlagen, welche eine einfache Montage erlauben.

Diese Aufgabe wird durch eine Schaltdombaueinheit mit den Merkmalen des Anspruches 1, sowie durch ein Verfahren mit den Merkmalen des Anspruches 14 gelöst. Bevorzugte oder vorteilhafte Ausführungsformen der Erfindung ergeben sich aus den Unteransprüchen, der nachfolgenden Beschreibung sowie den beigefügten Figuren.

Die Erfindung betrifft eine Schaltdombaueinheit, aufweisend ein Schaltdomgehäuse, eine Schaltwelle und eine Lageranordnung zur Lagerung der Schaltwelle. Die Lageranordnung weist mindestens eine Lagervorrichtung auf, wobei die Lagervorrichtung zur schwenkbaren, insbesondere rotierbaren, und/oder verschiebbaren Lagerung der Welle um bzw. entlang ihrer Längserstreckung bzw. Mittelachse ausgebildet ist. Die Welle ist bevorzugt als ein zumindest abschnittsweise stabförmiges Bauteil realisiert, welches zur Übertragung von Kräften angeordnet und/oder anordbar ist. Die Lagervorrichtung kann in der allgemeinsten Ausprägung der Erfindung eine beliebige Form annehmen, so kann die Lagervorrichtung zum Beispiel als Gleitlager oder Wälzlager ausgebildet sein.

Der Schaltdombaueinheit ist ein Aufnahmeabschnitt, vorzugsweise eine Stützkonstruktion, zugeordnet, welche eine Aufnahme aufweist, in die die Lagervorrichtung zumindest abschnittsweise eingesetzt werden kann. Der Aufnahmeabschnitt kann beispielsweise als eine Wand, ein Steg etc. ausgebildet sein. Des Weiteren umfasst die Schaltdombaueinheit mindestens ein Rückhalteelement, welches einstückig oder auch mehrstückig ausgebildet sein kann, wobei das Rückhalteelement angeordnet und/oder ausgebildet ist, ein Herauswandern der Lagervorrichtung insbesondere in einer axialen Richtung der Welle bzw. der Lagervorrichtung aus der Aufnahme zu verhindern. Vorzugsweise ist die Aufnahme so ausgebildet, dass die Lagervorrichtung in den Aufnahmeabschnitt eingeschoben und/oder eingepresst werden muss bzw. ist. Das Rückhalteelement dient zur Verriegelung der Lagervorrichtung, insbesondere derart, dass diese im Betrieb nicht gegen die Einschubrichtung herauswandern kann. Zur Aufnahme des Rückhalteelements weist die Lageranordnung eine Halterung auf. Erfindungsgemäß wird vorgeschlagen, dass das Rückhalteelement in der Halterung in einer Einschubrichtung winklig zur Längserstreckung der Welle eingeschoben ist. Durch diese spezifische Ausbildung der Halterung bzw. des Rückhalteelements wird erreicht, dass die Einschubrichtung für das Rückhalteelement nicht parallel zur Kraftrichtung der Lagervorrichtung bei einem axialen Herauswandern aus dem Aufnahmeabschnitt ist. Hierdurch ergibt sich ein formschlüssiges Halten der Lagervorrichtung bei zugleich einfacher Montage des Rückhalteelements. Das Rückhalteelement wird während der Montage in die Halterung in eine Einschubrichtung winklig zur Längserstreckung der Welle eingeschoben.
Besonders bevorzugt ist es, wenn das Rückhalteelement bei der Montage senkrecht oder nahezu senkrecht zu der Längserstreckung der Welle in die Halterung eingeschoben wird. Hier ergeben sich die Vorteile der Erfindung am besten, da kein Kraftanteil der Kraft, die in axialer Richtung von der Lagervorrichtung auf das Rückhalteelement wirkt, gegen die Einschubrichtung des Rückhalteelements gerichtet ist.
Bevorzugt weist das Rückhalteelement eine Durchgangsöffnung auf, wobei der freie Durchmesser der Durchgangsöffnung zum einen zumindest abschnittsweise kleiner als der Außendurchmesser der Lagervorrichtung ausgebildet ist, um diese effektiv zurückhalten bzw. stirnseitig stützen zu können. Zum anderen ist der freie Durchmesser jedoch größer als der Außendurchmesser der Welle gewählt, um keine unnötige Reibung zwischen Rückhalteelement und Welle zu erzeugen. Die Durchgangsöffnung weist bevorzugt einen geschlossenen Rand auf, so dass das Rückhalteelement in sich konstruktiv stabil ist. Besonders bevorzugt wird die Lagervorrichtung in Umfangsrichtung vollständig und/oder geschlossen durch das Rückhalteelement abgestützt.

Bei einer bevorzugten konstruktiven Realisierung der Erfindung ist das Rückhalteelement als ein Plattenkörper ausgebildet und/oder weist zumindest einen plattenförmigen Abschnitt auf, welcher eine mittelbare oder bevorzugt eine unmittelbare Anlage für die Stirnseite der Lagervorrichtung bildet.

Prinzipiell ist es möglich, dass die Lagervorrichtung beidseitig jeweils mit einem derartigen Rückhalteelement vor dem Herauswandern in axialer Richtung aus der Aufnahme gesichert ist. In diesem Fall wird bei einem Einsetzen oder Einpressen der Lagervorrichtung beidseitig ein derartiges Rückhalteelement in Einschubrichtung eingeschoben. Mit dem Ziel, Bauteile zu reduzieren, ist es jedoch bevorzugt, wenn die Aufnahme in dem Aufnahmeabschnitt so ausgebildet ist, dass diese in einer axialen Richtung formschlüssig das Herauswandern verhindert. Dies kann beispielsweise durch eine Verjüngung des Raums der Aufnahme oder einen Absatz in dieser axialen Richtung realisiert werden. Die andere axiale Richtung, gegen die die Lagervorrichtung in den Aufnahmeabschnitt eingeschoben und/oder eingepresst wird, wird dagegen mit dem Rückhalteelement verriegelt. Es ist auch möglich, dass die Aufnahme als ein Sackloch ausgebildet ist, so dass die Lagervorrichtung nur in einer axialen Richtung gesichert werden muss.

Bei einer weiteren bevorzugten Ausführungsform ist die Aufnahme durch ein Funktionselement, begrenzt, welches den Anschlag für die Lagervorrichtung bildet. Das Funktionselement ist in der Aufnahme beispielsweise eingeschraubt, eingeklebt oder eingeschweißt. Bei einer beispielhaften Ausführung ist das Funktionselement ein Dichtring, z.B. mit einer berührenden Lippendichtung, der die Welle gegenüber dem Aufnahmeabschnitt abdichtet.
Bei einer besonders bevorzugten Ausführungsform der Erfindung ist der Aufnahmeabschnitt und/oder das Rückhalteelement aus Kunststoff ausgebildet. Besonders bevorzugt sind eine oder beide Teile in einem Spritzgussverfahren hergestellt. Gerade bei der Ausbildung in Kunststoff erscheint es notwendig, die Lagervorrichtung nicht nur durch ein Verpressen oder Einschieben in den Aufnahmeabschnitt zu fixieren, sondern ergänzend eine formschlüssige Verriegelung mit dem Rückhalteelement vorzusehen, um eine dauerhafte Definition der Position der Lagervorrichtung zu erreichen.
Die Halterung für das Rückhalteelement kann prinzipiell an einer beliebigen Position sein, produktionstechnisch ist es jedoch bevorzugt, dass die Halterung und der Aufnahmeabschnitt einstückig miteinander verbunden sind. Diese Ausbildung hat den Vorteil, dass - beispielsweise bei einer Ausführung in Kunststoff - Halterung und Aufnahmeabschnitt in einem gemeinsamen Werkzeug gespritzt werden können.
Obgleich bei bevorzugten Ausführungsformen der Erfindung das Rückhalteelement nach der Montage der Welle verliersicher durch die Welle in der Halterung gehalten wird, ist es auch bevorzugt, das Rückhalteelement mit der Halterung und/oder dem Aufnahmeabschnitt unverlierbar zu verbinden. Eine derartige Verbindung kann beispielsweise stoffschlüssig sein, indem das Rückhalteelement eingeklebt, eingeschweißt wird, alternativ kann das Rückhalteelement reibschlüssig gesichert sein, indem es beispielsweise eingepresst wird. Bei einer Alternative bzw. Ergänzung kann das Rückhalteelement auch formschlüssig, zum Beispiel durch Einklipsen, festgelegt werden.

Die Schaltdombaueinheit ist geeignet und/oder ausgebildet, Schalt- und/oder Wählbewegungen von einem Benutzer eines Fahrzeuges oder von einem Aktor zu einem Schaltgetriebe des Fahrzeuges zu übertragen. Die Schaltdombaueinheit umfasst ein Schaltdomgehäuse, welches bevorzugt aus Kunststoff ausgebildet ist. In der Schaltdombaueinheit ist eine Schaltwelle eingebaut, welche als die Welle in der Lageranordnung schwenkbar und/oder verschiebbar gelagert ist. Um eine kostengünstige Fertigung zu erreichen, ist es bevorzugt, dass der Aufnahmeabschnitt einstückig mit dem Schaltdomgehäuse ausgebildet ist. Wird das Schaltdomgehäuse durch ein Spritzgussverfahren hergestellt, so kann das Schaltdomgehäuse mit dem integrierten Aufnahmeabschnitt im Rahmen des Urformens gefertigt werden.

Bei einer bevorzugten konstruktiven Ausgestaltung der Erfindung ist die Lagervorrichtung als ein Wälzlager realisiert. Bevorzugt handelt es sich hierbei um ein Linear-Rotationswälzlager, wobei sowohl die Drehbewegung als auch die Verschiebebewegung durch ein Abwälzen und/oder Abrollen von Wälzkörper des Wälzlagers umgesetzt wird. Besonders bevorzugt weist das Wälzlager einen kugelgelagerten, in axialer Richtung der Welle längsverschiebbaren Einsatz, insbesondere Käfig auf. Bei dieser bevorzugten Ausgestaltung zeigt die erfindungsgemäße Festlegung der Lagervorrichtung in dem aus Kunststoff bestehenden Aufnahmeabschnitt besondere Vorteile. Bei einem ungesicherten Sitz der Lagervorrichtung in dem Aufnahmeabschnitt wäre zu befürchten, dass aufgrund des Materialmixes aus dem Metall des Wälzlagers und dem Kunststoff des Aufnahmeabschnitts und aufgrund von unterschiedlichen Wärmeausdehnungskoeffizienten der Materialien sich die Lagervorrichtung im Betrieb bei Temperaturwechselbelastungen aus dem Abnahmeabschnitt lösen und herauswandern würde.

Bei einer bevorzugten Weiterbildung der Erfindung weist die Schaltdombaueinheit zwei voneinander beabstandete Lageranordnungen auf, über die die Schaltwelle gelagert ist, wobei mindestens eine, bevorzugt beide, Lageranordnung(en) wie zuvor beschrieben, ausgebildet sind. Besonders bevorzugt ist, wenn die Schaltwelle mit einem freien Ende gelagert ist, wobei auf dem freien Ende ein Funktionselement angeordnet ist. Beispielsweise kann das Schaltdomgehäuse zwei Kammerabschnitte aufweisen, wobei in jedem Kammerabschnitt ein Funktionselement angeordnet ist. Die erste Lagervorrichtung ist bevorzugt an oder in einer Außenwand des Schaltdomgehäuses angeordnet, die zweite Lageranordnung zwischen den zwei Kammerabschnitten positioniert. Als Funktionselemente werden bevorzugt Rastfinger zur Übertragung der Schalt- und/oder Wählbewegungen, Rastbleche, Kulissenfinger oder Schaltkulissen eingesetzt.

Bei einer bevorzugten konstruktiven Umsetzung der Erfindung weist das Schaltdomgehäuse eine Kopplungsöffnung zur Kopplung mit einem Getriebegehäuse auf, wobei die Flächenerstreckung der Kopplungsöffnung und die Längserstreckung der Schaltwelle gleichgerichtet ist. Insbesondere ist die Schaltwelle liegend und nicht stechend zu dem Getriebegehäuse angeordnet.

Ein weiterer Gegenstand der Erfindung betrifft ein Verfahren zur Montage einer Lagervorrichtung.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Fig. 1: eine schematische dreidimensionale Draufsicht auf eine Schaltdombaueinheit als ein Ausführungsbeispiel der Erfindung;
- Fig. 2: eine schematische dreidimensionale Ansicht von unten auf die Schaltdombaueinheit nach Figur 1;
- Fig. 3: eine schematische dreidimensionale Ansicht von unten auf das einstückige Schaltdomgehäuse der Schaltdombaueinheit nach Figur 1;
- Fig. 4: eine schematische dreidimensionale Ansicht im Teilschnitt von unten auf die Schaltdombaueinheit nach Figur 1;
- Fig. 5: eine schematische dreidimensionale Darstellung eines Rückhalteelements zum Zurückhalten der Lagereinsätze in der Schaltdombaueinheit nach Figur 1;
- Fig. 6: eine schematische dreidimensionale Darstellung eines der Lagereinsätze in der Schaltdombaueinheit nach Figur 1;
- Fig. 7: eine schematische dreidimensionale Darstellung auf die Baugruppe Rückhalteelement und Lagereinsatz in der Einbausituation;
- Fig. 8: eine Detaildarstellung der Figur 2 im Bereich des zweiten Lagerbereichs;
- Fig. 9: eine Detaildarstellung der Figur 2 im Bereich des ersten Lagerbereichs;
- Fig. 10 -12: schematische Darstellungen der Montage des ersten Lagerbereichs.

Gleiche oder einander entsprechende Teile sind jeweils mit gleichen bzw. einander entsprechenden Bezugszeichen versehen. Es wird unterstrichen, dass die Einzelbaugruppen oder Einzelkomponenten auch in anderen Vorrichtungen einsetzbar sind.

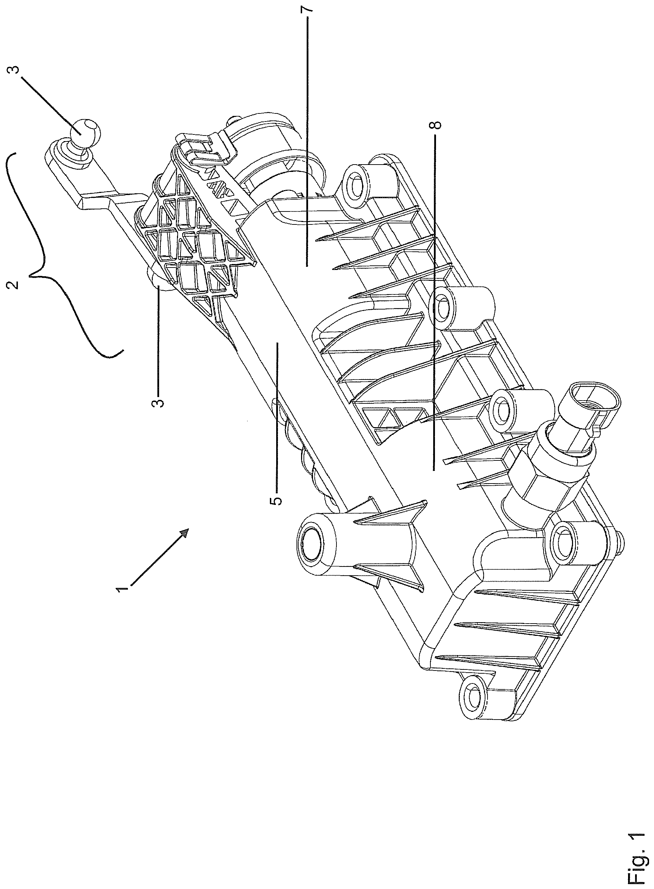

Die Figur 1 zeigt in einer schematisch dreidimensionalen Darstellung eine Schaltdombaueinheit 1 als ein Ausführungsbeispiel der Erfindung. Die Schaltdombaueinheit 1 ist ausgebildet, um eine Wähl- und/oder Schaltbewegung, welche von einem Benutzer oder einem Aktor eingeleitet wird, umzusetzen und an ein nachgeschaltetes Getriebe, insbesondere ein Zahnräderwechselgetriebe, weiterzugeben. Die Schaltdombaueinheit 1 ist insbesondere zur Verwendung in einem Kraftfahrzeug ausgebildet. Zum Einleiten der Schalt- und/oder Wählbewegungen zeigt die Schaltdombaueinheit 1 ein Hebelwerk 2, welches mechanische Schnittstellen, zum Beispiel in Form von Kugelköpfen 3 zur mechanischen Kopplung zum Beispiel mit Bowdenzügen oder Schaltstangen aufweist.

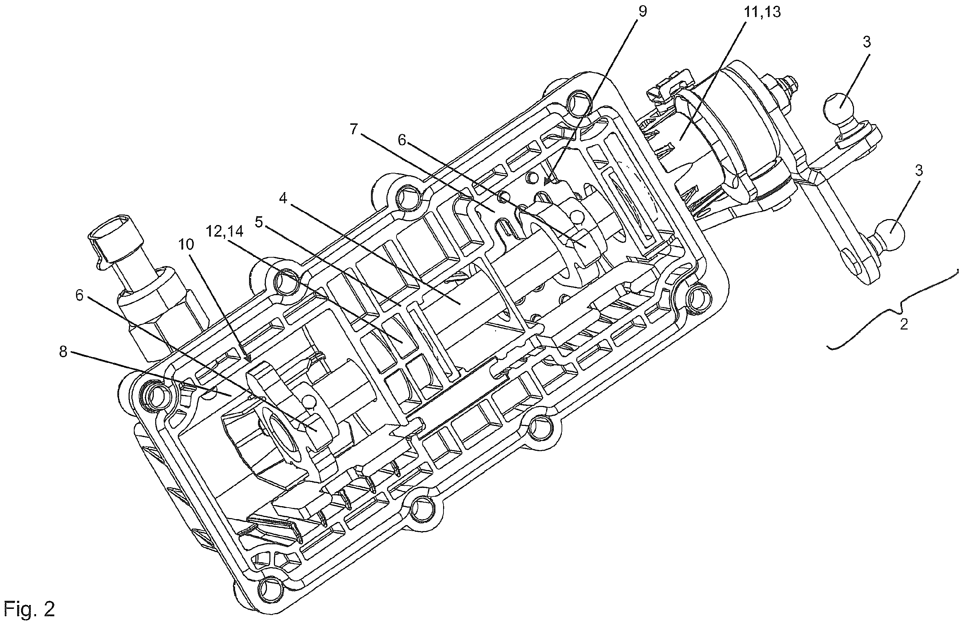

Die Wähl- und/oder Schaltbewegungen werden auf eine Schaltwelle 4 übertragen, welche in der Figur 2 zu erkennen ist. Die Figur 2 zeigt die Schaltdombaueinheit 1 von der Unterseite ebenfalls in einer schematischen dreidimensionalen Darstellung. Die Schaltwelle 4 ist in einem Schaltdomgehäuse 5 bzw. über das Schaltdomgehäuse 5 hinsichtlich ihrer axialen Erstreckung verschiebbar und schwenkbar gelagert. Das Schaltdomgehäuse 5 ist aus Kunststoff ausgebildet und vorzugsweise im Kunststoffspritzguss hergestellt. An der Schaltwelle 4 sind Schaltfingerabschnitte 6 befestigt, welche die mittlerweile umgesetzte Schalt- und/oder Wählbewegung auf nicht dargestellte Schaltschienen oder andere Elemente überträgt. Die Schaltschienen erstrecken sich senkrecht zu der Schaltwelle 4, so dass diese bei einer Schwenkbewegung der Schaltfingerabschnitte 6 um die eigene Längsachse in Längsrichtung der Schaltschienen verschoben werden. Die Schaltfingerabschnitte 6 können wahlweise unmittelbar an die Schaltschienen oder über Mitnehmerelemente an den Schaltschienen angreifen. Beispielsweise sind jedem Schaltfingerabschnitt 6 mehrere Schaltschienen, zum Beispiel drei Schaltschienen, zugeordnet, welche in Abhängigkeit der axialen Lage der Schaltwelle 4 von den Schaltfingerabschnitten 6 selektiv betätigt werden und denen - insbesondere bis auf dem Rückwärtsgang - jeweils zwei wählbare Gänge, zum Beispiel erster zweiter Gang oder dritter vierter Gang zugeordnet sind.

Das Schaltdomgehäuse 5 weist zwei voneinander räumlich getrennte Kammerbereiche 7 und 8 auf, durch bzw. in die sich die Schaltwelle 4 erstreckt. In dem ersten Kammerbereich 7, durch den sich die Schaltwelle 4 vollständig oder durchgehend erstreckt, ist eine Kulissenanordnung 9 realisiert, die eine Zwangs- oder Kulissenführung der Schaltwelle 4 hinsichtlich der Verschiebe- und/oder Schwenkbewegungen definiert. Im zweiten Kammerbereich ist eine Rastanordnung 10 positioniert, welcher ein Einrasten der Schaltwelle 4 bei bestimmten Positionen, insbesondere bei zu einem gewählten und/oder eingelegten Gang korrespondierenden Positionen umsetzt. Zudem wird durch die Rastanordnung 10 die aufzuwendende Schalt- bzw. Wählkraft gesteuert. Im zweiten Kammerbereich 8 endet die Schaltwelle 4 mit einem freien, ungelagerten Ende.

Die Schaltwelle 4 ist über zwei Lagerbereiche 11, 12 gelagert, wobei der erste Lagerbereich 11 im Bereich einer Durchgangsöffnung 13 in dem Schaltdomgehäuse 5 und der zweite Lagerbereich 12 in einem Zwischensteg 14 zwischen dem ersten Kammerbereich 7 und dem zweiten Kammerbereich 8 angeordnet ist. Durch diese Lageranordnung ist die Schaltwelle 4 im Hinblick auf das freie Ende im Bereich der Rastanordnung 10 fliegend gelagert.

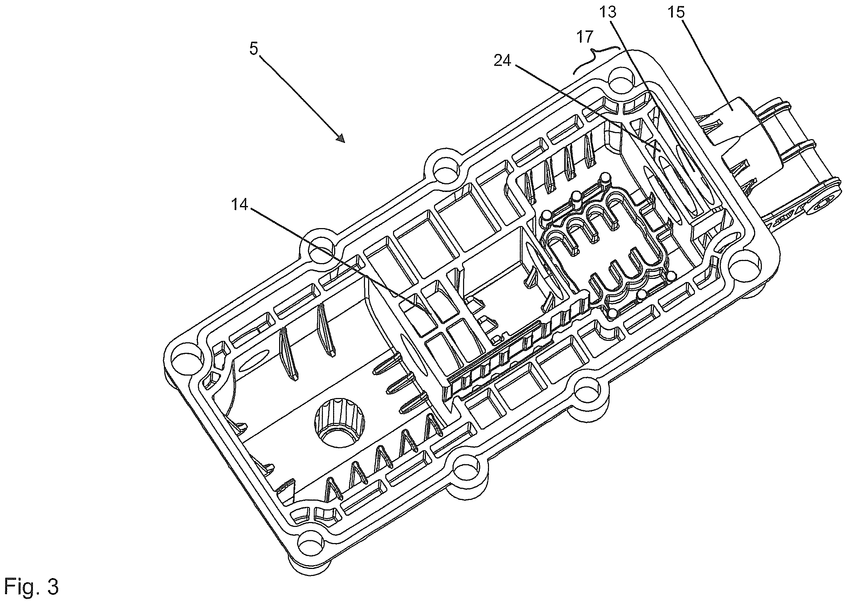

Die Figur 3 zeigt das einstückige Schaltdomgehäuse 5 in einer isometrischen schematischen Darstellung von der Unterseite. Aus dieser Darstellung ist zu entnehmen, dass die Durchgangsöffnung 13 durch einen einstückig aufgesetzten oder angeformten Stutzen 15 gebildet wird.

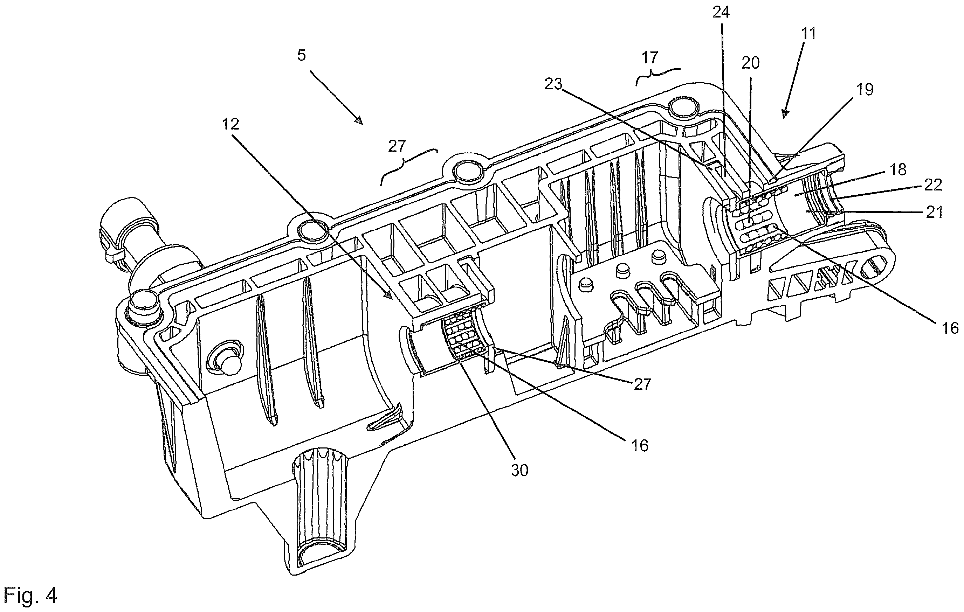

Die Figur 4 zeigt in einem schematischen Längsschnitt des Schaltdomgehäuses 5 durch die nicht dargestellte Schaltwelle 4 den Aufbau des ersten Lagerbereichs 11 und des zweiten Lagerbereichs 12. In dem ersten Lagerbereich 11 ist eine erste RLF-Lagerung 16 angeordnet, die sich beginnend im Stutzen 15 bis in den Bereich einer ersten Halterung 17 erstreckt. Die RLF-Lagerung 16 ist als eine Linear-Rotationswälzlagerung ausgebildet und weist eine Hülse 18, insbesondere aus Metall, auf, in die ein Käfig 19 mit vier Reihen Wälzkörpern 20 in Form von Kugeln derart abwälzend gelagert ist, so dass der Käfig 19 zum einen die Schaltwelle 4 in Umlaufrichtung rotierend und/oder schwenkbar lagert und zum anderen in Längserstreckung der Schaltwelle 4 einen linearen Verschiebeweg bereitstellt.

Nachdem es technologisch anspruchsvoll ist, die metallische RLF-Lagerung 16 unmittelbar in dem Schaltdomgehäuse 5 aus Kunststoff festzulegen, wird die RLF-Lagerung 16 in einen zylinderförmigen Innenraum 21 eingeschoben, wobei in Richtung Außenseite ein Dichtungsring 22 als ein erster Endanschlag für die RLF-Lagerung 16 wirkt. Der Dichtungsring 22 ist beispielsweise aus Kunststoff ausgeführt und als berührende Lippendichtung für die Schaltwelle 4 realisiert. Um die Funktion als Endanschlag wahrnehmen zu können, ist der Dichtungsring 22 in dem Innenraum 21 festgelegt, zum Beispiel durch schweißen, kleben, verklipsen oder dergleichen.

Auf der gegenüberliegenden Seite wird die RLF-Lagerung 16 vor einem Herauswandern durch ein Rückhalteelement in Form einer Platte 23 gesichert, welche in einer Einschubrichtung senkrecht zur Längserstreckung der Schaltwelle 4 in die Halterung 17 eingeschoben wird. Die Halterung 17 zeigt hierfür einen flachkanalförmigen Aufnahmeraum 24 welcher im Querschnitt senkrecht zur Einschubrichtung der Platte 23 rechteckig mit in Einschubrichtung konstantem Querschnittprofil ausgebildet ist.

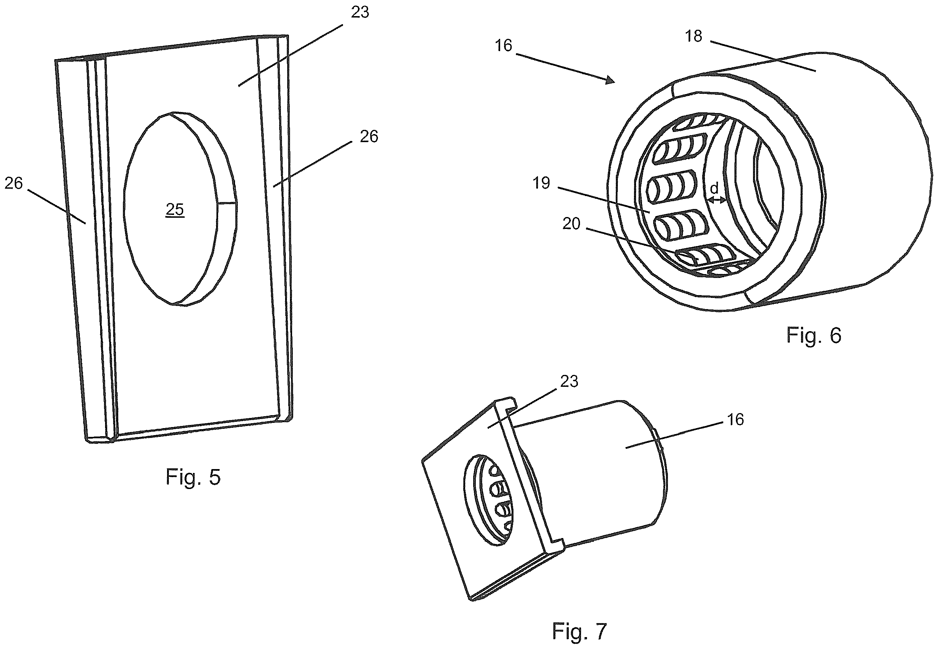

Die Figur 5 zeigt in einer schematischen dreidimensionalen Darstellung die Platte 23 aus Kunststoff, welche eine Durchgangsöffnung 25 zur Aufnahme der Schaltwelle 4 aufweist. Seitlich, in Einschubrichtung verlaufend, sind zwei Stege 26 angeformt, die, ausgehend von der in der Figur 5 dargestellten Oberseite in Längserstreckung der Schaltwelle 5 verjüngend bzw. rampenförmig ausgebildet sind. Die Stege 26 dienen dazu, dass die Platte 23 in dem Aufnahmeraum 24 nach einem vollständigen Einschieben klemmend festgehalten wird. Alternativ hierzu kann die Platte 23 auch mit anderen Verfahren festgelegt werden, wie z.B. verkleben, verschweißen, einklipsen etc. Der freie Durchmesser der Durchgangsöffnung 25 ist so bemessen, dass die Schaltwelle 4 an dessen Rand reibungsfrei beabstandet ist. Ein Verlust der Platte 25 ist nicht zu befürchten, da - nach dem Einschieben der Schaltwelle 4 - die Platte 23 verliersicher gehalten ist.

In der Figur 6 ist eine schematische, dreidimensionale Darstellung der RLF-Lagerung 16 zu sehen, wobei nochmals zu erkennen ist, dass der Käfig 19 in Längserstreckungsrichtung der Schaltwelle 4 über die Wälzkörper 20 um den Weg d verschiebbar gelagert ist.

Die Figur 7 zeigt die Platte 23 und die RLF-Lagerung 16 in Einbaulage, wobei zu entnehmen ist, dass die freie Durchgangsöffnung 25 der Platte 23 kleiner als der stirnseitige, benachbarte Außendurchmesser der RLF-Lagerung 16 ausgeführt ist. Auf diese Weise wird die RLF-Lagerung 16 in dem Innenraum 21 durch die Platte 23 formschlüssig vor dem Herauswandern in axialer Richtung gesichert. Um eine unkontrollierbare Toleranz zu vermeiden, ist es bevorzugt, wenn die RLF-Lagerung 16 zwischen dem Dichtungsring 22 und der Platte 23 spaltfrei angeordnet ist.

Zurückkehrend zu der Figur 4 ist zu erkennen, dass der zweite Lagerbereich 12 ebenfalls eine RLF-Lagerung 16 aufweist, die analog zu der ersten RLF-Lagerung 16 ausgebildet ist, so dass auf deren Beschreibung verwiesen wird. Die RLF-Lagerung 16 ist vollständig in dem Zwischensteg 14 aufgenommen, wobei auf der dem ersten Lagerbereich 11 zugewanden Seite eine zweite Halterung 27 angeordnet ist, in die eine zweite Platte 28 in gleicher Einschubrichtung wie die erste Platte 23 eingeschoben ist. Nachdem auch die Halterung 27 analog zu der Halterung 17 ausgeführt ist, wird ebenfalls auf die dortige Beschreibung verwiesen. Die formschlüssige Fixierung der RLF-Lagerung 16 in dem zweiten Lagerbereich 12 wird auf der gegenüberliegenden Seite jedoch durch eine Verjüngung bzw. einen Absatz 29 realisiert, welcher den freien Durchmesser des die RLF-Lagerung 16 aufnehmenden Innenraums 30 verringert, so dass die Stirnseite der RLF-Lagerung 16 formschlüssig anliegt.

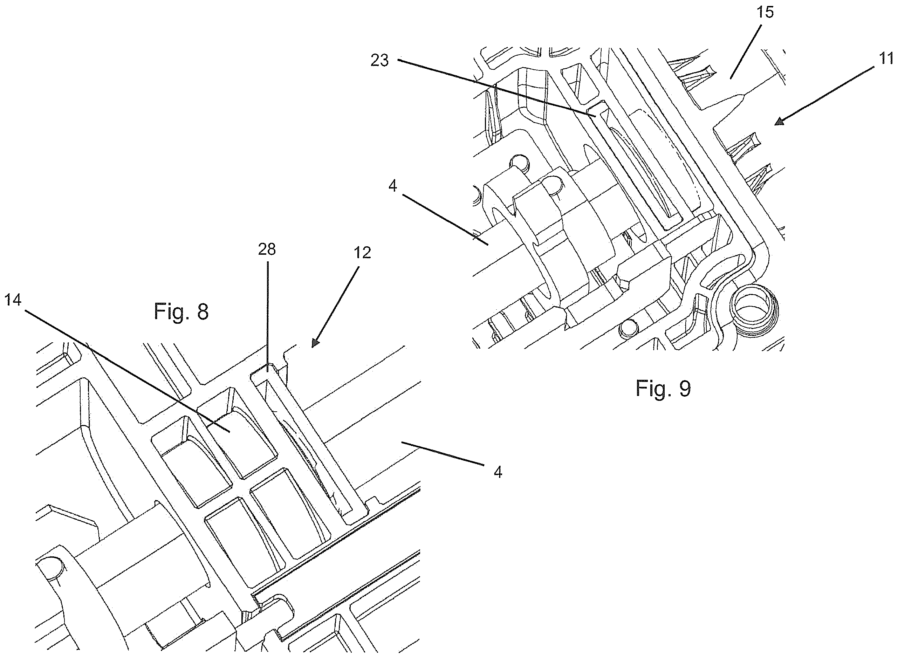

Die Figuren 8 und 9 zeigen den ersten Lagerbereich 11 und den zweiten Lagerbereich 12 in einer schematischen dreidimensionalen Draufsicht, wobei die eingeführten Platten 23 bzw. 28 zu erkennen sind. Die zugeordneten Stege 26 der Platten 23 bzw. 28 sind jeweils in Richtung der benachbarten RLF-Lagerungen 16 gewandt, so dass sich die RLF-Lagerungen 16 stirnseitig formschlüssig an den Platten 23 bzw. 28 und folglich großflächig an der Halterung 17 bzw. 27 abstützen. Das Schaltdomgehäuse 5 weist an seiner Stirnseite in der Außenwand ein in den Ansichten verdecktes Entlüftungsloch auf, welches benachbart zu dem ersten Lagerbereich 11 angeordnet ist. Ein weiterer Vorteil der Halterung 17 ist darin zusehen, dass durch die Halterung 17 dieses Entlüftungsloch und zudem die erste Lagerbereich 11 vor Ölspritzern geschützt ist.

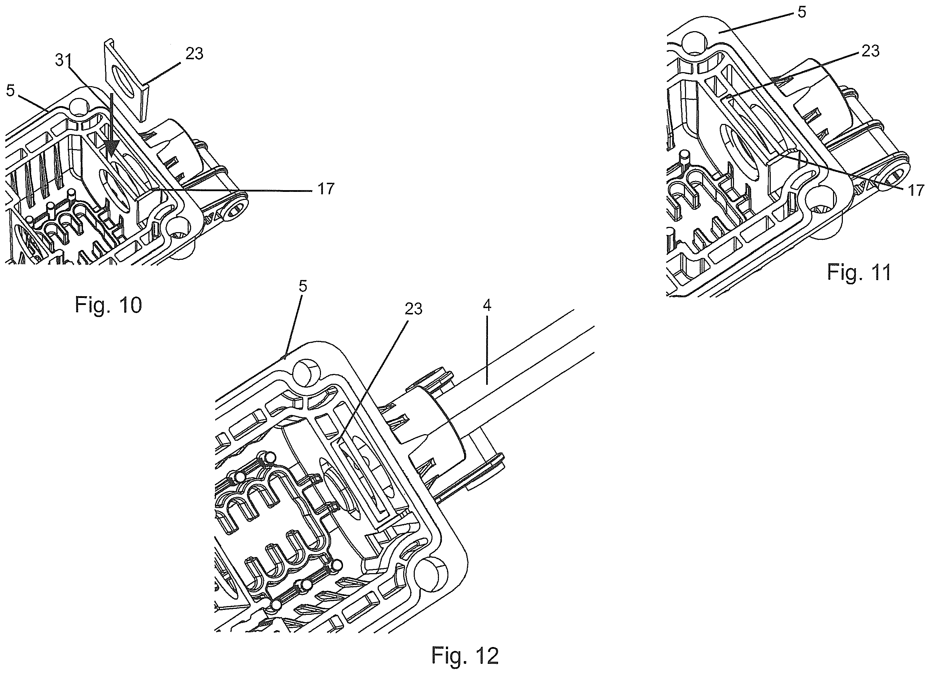

Die Figuren 10 bis 12 illustrieren den Zusammenbau am Beispiel des ersten Lagerbereichs 11. In der Figur 10 ist die Platte 23 in einiger Entfernung zu dem Schaltdomgehäuse 5 gezeigt und wird gerade in Einschubrichtung 31 in die erste Halterung 17 eingeschoben wird.

Die Figur 11 zeigt die Platte 23 in eingeschobener Position in der Halterung 17. In einem nächsten Arbeitsschritt - wie er in der Figur 12 dargestellt ist - wird dann die Schaltwelle 4 entlang ihrer Längserstreckung durch den Stutzen 15, die RLF-Lagerung 16, die Halterung 17 und die Platte 23 durchgeschoben, so dass die Platte 23 nachfolgend unverlierbar durch die Schaltwelle 4 gegengesichert ist. Es ist darauf hinzuweisen, dass in den Figuren 8 bis 10 eine Vielzahl von Einzelkomponenten zeichnerisch unterdrückt wurden, welche bei einem realen Montagevorgang möglicherweise vor der Montage der Schaltwelle 4 eingebaut werden.

### Bezugszeichenliste

- 1: Schaltdombaueinheit
- 2: Hebelwerk
- 3: Kugelköpfe
- 4: Schaltwelle
- 5: Schaltdomgehäuse
- 6: Schaltfingerabschnitte
- 7: erster Kammerbereich
- 8: zweiter Kammerbereich
- 9: Kulissenanordnung
- 10: Rastanordnung
- 11: erster Lagerbereich
- 12: zweiter Lagerbereich
- 13: Durchgangsöffnung
- 14: Zwischensteg
- 15: Stutzen
- 16: RLF-Lagerung
- 17: erste Halterung
- 18: Hülse
- 19: Käfig
- 20: Wälzkörper, Kugeln
- 21: zylinderförmiger Innenraum
- 22: Dichtungsring
- 23: Platte
- 24: Aufnahmeraum
- 25: Durchgangsöffnung
- 26: Stege
- 27: zweite Halterung
- 28: zweite Platte
- 29: Absatz
- 30: Innenraum
- 31: Einschubrichtung

## Patentansprüche

1. Schaltdombaueinheit (1), aufweisend ein Schaltdomgehäuse (5), eine Schaltwelle (4) und eine Lageranordnung (11,12) zur Lagerung der Schaltwelle (4), wobei die Lageranordnung (11, 12) versehen ist mit einer Lagervorrichtung (16), wobei die Lagervorrichtung (16) zur schwenkbaren und/oder verschiebbaren Lagerung der Welle (4) ausgebildet ist, mit einem Aufnahmeabschnitt (14, 15), wobei die Lagervorrichtung (16) in einer Aufnahme (21) des Aufnahmeabschnitts (14, 15) angeordnet ist, mit einem Rückhalteelement (23, 28), wobei das Rückhalteelement (23, 28) angeordnet und/oder ausgebildet ist, ein Herauswandern der Lagervorrichtung (16) aus der Aufnahme (21) zu verhindern, und mit einer Halterung (17,27) für das Rückhalteelement (23, 28), wobei das Rückhalteelement (23, 28) in die Halterung (17, 27) in einer Einschubrichtung (30) winklig zur Längserstreckung der Welle (4) eingeschoben ist.

2. Schaltdombaueinheit (1) nach Anspruch 1, **dadurch gekennzeichnet, dass** das Rückhalteelement (23, 28) bei der Montage senkrecht zu der Längserstreckung der Welle (4) in die Halterung (17, 27) eingeschoben wird.

3. Schaltdombaueinheit (1) nach Anspruch 1 oder 2, **dadurch gekennzeichnet, dass** das Rückhalteelement (23, 28) eine Durchgangsöffnung (25) aufweist, wobei der freie Durchmesser der Durchgangsöffnung (25) zumindest abschnittsweise kleiner als der Außendurchmesser der Lagervorrichtung (16) ausgebildet ist.

4. Schaltdombaueinheit (1) nach einem der vorhergehenden Ansprüche, **dadurch gekennzeichnet, dass** das Rückhalteelement als ein Plattenkörper (23, 28) ausgebildet ist.

5. Schaltdombaueinheit (1) nach einem der vorhergehenden Ansprüche, **dadurch gekennzeichnet, dass** die Lagervorrichtung (16) ein- oder beidseitig jeweils mit einem derartigen Rückhalteelement (23, 28) vor dem Herauswandern aus der Aufnahme (21) gesichert ist.

6. Schaltdombaueinheit (1) nach einem der vorhergehenden Ansprüche, **dadurch gekennzeichnet, dass** die Lagervorrichtung (16) in einer axialen Richtung mit dem Rückhalteelement (23, 28) und in die andere axiale Richtung durch einen Absatz in der Aufnahme und/oder durch ein Funktionselement gesichert ist.

7. Schaltdombaueinheit (1) nach einem der vorhergehenden Ansprüche, **dadurch gekennzeichnet, dass** das Rückhalteelement (23, 28) mit der Halterung und/oder dem Aufnahmeabschnitt stoffschlüssig und/oder formschlüssig verbunden ist.

8. Schaltdombaueinheit (1) nach einem der vorhergehenden Ansprüche **dadurch gekennzeichnet, dass** der Aufnahmeabschnitt (14, 15) einstückig in dem Schaltdomgehäuse (5) ausgebildet ist.

9. Schaltdombaueinheit (1) nach Anspruch 8, **dadurch gekennzeichnet, dass** die Schaltwelle (2) über zwei voneinander beabstandete Lageranordnungen (11,12) gelagert ist, wobei beide als die Lageranordnung (11, 12) wie in einem der vorhergehenden Ansprüche 1 bis 7 ausgebildet sind.

10. Schaltdombaueinheit (1) nach einem der vorhergehenden Ansprüche, **dadurch gekennzeichnet, dass** die Lagervorrichtung als ein Wälzlager (16) ausgebildet ist.

11. Schaltdombaueinheit (1) nach Anspruch 10, **dadurch gekennzeichnet, dass** das Wälzlager einen kugelgelagerten, drehbaren und längsverschiebbaren Einsatz (19) aufweist.

12. Schaltdombaueinheit (1) nach einem der Ansprüche 8 bis 11, **dadurch gekennzeichnet, dass** die Schaltwelle (4) mit einem freien Ende gelagert ist, wobei auf dem freien Ende ein Funktionselement (10) angeordnet ist.

13. Schaltdombaueinheit (1) nach einem der vorhergehenden Ansprüche, **dadurch gekennzeichnet, dass** das Schaltdomgehäuse (5) eine Kopplungsöffnung zur Kopplung mit einem Getriebegehäuse aufweist, wobei die Flächenerstreckung der Kopplungsöffnung und die Längserstreckung der Schaltwelle (4) gleichgerichtet ist.

14. Verfahren zum Festlegen einer Lagervorrichtung (16) in einer Schaltdombaueinheit (1) nach einem der vorhergehenden Ansprüche, **dadurch gekennzeichnet, dass** in einem ersten Schritt die Lagervorrichtung (16) in den Aufnahmeabschnitt (14,15) eingeführt, insbesondere eingepresst wird, in einem weiteren Schritt das Rückhalteelement (23,28) in die Halterung (17,27) eingeführt wird und schließlich die Schaltwelle (4) eingebaut wird.

## Claims

1. Gearshift dome unit (1), having a gearshift dome housing (5), a selector shaft (4) and a bearing arrangement (11, 12) for supporting the selector shaft (4), wherein the bearing arrangement (11, 12) is provided with a bearing device (16), wherein the bearing device (16) is designed for the pivotable and/or displaceable mounting of the shaft (4), having a holding section (14, 15), wherein the bearing device (16) is arranged in a holder (21) of the holding section (14, 15), having a retaining element (23, 28), wherein the retaining element (23, 28) is arranged and/or designed to prevent the bearing device (16) moving out of the holder (21), and having a holding element (17, 27) for the retaining element (23, 28), wherein the retaining element (23, 28) is inserted into the holding element (17, 27) in an insertion direction (30) at an angle to the longitudinal extent of the shaft (4).

2. Gearshift dome unit (1) according to Claim 1, **characterized in that** during the assembly the retaining element (23, 28) is inserted into the holding element (17, 27) at right angles to the longitudinal extent of the shaft (4).

3. Gearshift dome unit (1) according to Claim 1 or 2, **characterized in that** the retaining element (23, 28) has a passage opening (25), wherein the free diameter of the passage opening (25) is, at least in some sections, formed so as to be smaller than the external diameter of the bearing device (16).

4. Gearshift dome unit (1) according to one of the preceding claims, **characterized in that** the retaining element is formed as a plate-like body (23, 28).

5. Gearshift dome unit (1) according to one of the preceding claims, **characterized in that** the bearing device (16) is respectively secured on one or both sides by such a retaining element (23, 28) against moving out of the holder (21).

6. Gearshift dome unit (1) according to one of the preceding claims, **characterized in that** the bearing device (16) is secured in an axial direction by the retaining element (23, 28) and in the other axial direction by a ledge in the holder and/or by a functional element.

7. Gearshift dome unit (1) according to one of the preceding claims, **characterized in that** the retaining element (23, 28) is connected to the holding element and/or the holding section in an integral and/or form-fitting manner.

8. Gearshift dome unit (1) according to one of the preceding claims, **characterized in that** the holding section (14, 15) is formed in one piece in the gearshift dome housing (5).

9. Gearshift dome unit (1) according to Claim 8, **characterized in that** the selector shaft (2) is supported via two bearing arrangements (11, 12) at a distance from each other, wherein both are formed like the bearing arrangement (11, 12) as in one of the preceding Claims 1 to 7.

10. Gearshift dome unit (1) according to one of the preceding claims, **characterized in that** the bearing device is formed as a rolling-contact bearing (16).

11. Gearshift dome unit (1) according to Claim 10, **characterized in that** the rolling-contact bearing has a ball-supported, rotatable and longitudinally displaceable insert (19).

12. Gearshift dome unit (1) according to one of Claims 8 to 11, **characterized in that** the selector shaft (4) is supported with one free end, wherein a functional element (10) is arranged on the free end.

13. Gearshift dome unit (1) according to one of the preceding claims, **characterized in that** the gearshift dome housing (5) has a coupling opening for coupling to a gearbox housing, wherein the two-dimensional extent of the coupling opening and the longitudinal extent of the selector shaft (4) are aligned in the same direction.

14. Method for fixing a bearing device (16) in a gearshift dome unit (1) according to one of the preceding claims, **characterized in that** in a first step the bearing device (16) is inserted into the holding section (14, 15), in particular pressed in, in a further step the retaining element (23, 28) is inserted into the holding element (17, 27), and finally the selector shaft (4) is installed.

## Revendications

1. Unité modulaire de coupelle de commande de vitesses (1), présentant un boîtier de coupelle de commande de vitesses (5), un arbre de changement de vitesses (4) et un agencement de palier (11, 12) pour le support sur palier de l'arbre de changement de vitesses (4), l'agencement de palier (11, 12) étant pourvu d'un dispositif de palier (16), le dispositif de palier (16) étant réalisé pour supporter l'arbre (4) de manière pivotante et/ou déplaçable, d'une portion de réception (14, 15), le dispositif de palier (16) étant disposé dans un logement (21) de la portion de réception (14, 15), d'un élément de retenue (23, 28), l'élément de retenue (23, 28) étant disposé et/ou réalisé de manière à empêcher que le dispositif de palier (16) ressorte du logement (21) et d'une fixation (17, 27) pour l'élément de retenue (23, 28), l'élément de retenue (23, 28) étant enfoncé dans la fixation (17, 27) dans une direction d'enfoncement (30) suivant un angle par rapport à l'étendue longitudinale de l'arbre (4).

2. Unité modulaire de coupelle de commande de vitesses (1) selon la revendication 1, **caractérisée en ce que** l'élément de retenue (23, 28) est enfoncé dans la fixation (17, 27) lors du montage perpendiculairement à l'étendue longitudinale de l'arbre (4).

3. Unité modulaire de coupelle de commande de vitesses (1) selon la revendication 1 ou 2, **caractérisée en ce que** l'élément de retenue (23, 28) présente une ouverture de passage (25), le diamètre libre de l'ouverture de passage (25) étant au moins en partie plus petit que le diamètre extérieur du dispositif de palier (16).

4. Unité modulaire de coupelle de commande de vitesses (1) selon l'une quelconque des revendications précédentes, **caractérisée en ce que** l'élément de retenue est réalisé sous forme de corps en forme de plaque (23, 28).

5. Unité modulaire de coupelle de commande de vitesses (1) selon l'une quelconque des revendications précédentes, **caractérisée en ce que** le dispositif de palier (16) est fixé d'un côté ou des deux côtés à chaque fois à un tel élément de retenue (23, 28) pour l'empêcher de ressortir du logement (21).

6. Unité modulaire de coupelle de commande de vitesses (1) selon l'une quelconque des revendications précédentes, **caractérisée en ce que** le dispositif de palier (16) est fixé dans une direction axiale avec l'élément de retenue (23, 28) et dans l'autre direction axiale par un épaulement dans le logement et/ou par un élément fonctionnel.

7. Unité modulaire de coupelle de commande de vitesses (1) selon l'une quelconque des revendications précédentes, **caractérisée en ce que** l'élément de retenue (23, 28) est connecté à la fixation et/ou à la portion de réception par engagement par liaison de matière et/ou par correspondance de formes.

8. Unité modulaire de coupelle de commande de vitesses (1) selon l'une quelconque des revendications précédentes, **caractérisée en ce que** la portion de réception (14, 15) est réalisée d'une seule pièce dans le boîtier de coupelle de commande de vitesses (5).

9. Unité modulaire de coupelle de commande de vitesses (1) selon la revendication 8, **caractérisée en ce que** l'arbre de changement de vitesses (2) est supporté par le biais de deux agencements de palier espacés l'un de l'autre (11, 12), tous deux étant réalisés sous forme d'agencement de palier (11, 12) selon l'une quelconque des revendications 1 à 7.

10. Unité modulaire de coupelle de commande de vitesses (1) selon l'une quelconque des revendications précédentes, **caractérisée en ce que** le dispositif de palier est réalisé sous forme de palier à roulement (16).

11. Unité modulaire de coupelle de commande de vitesses (1) selon la revendication 10, **caractérisée en ce que** le palier à roulement présente un insert (19) supporté sur rotule, rotatif et déplaçable longitudinalement.

12. Unité modulaire de coupelle de commande de vitesses (1) selon l'une quelconque des revendications 8 à 11, **caractérisée en ce que** l'arbre de changement de vitesses (4) est supporté par une extrémité libre, un élément fonctionnel (10) étant disposé sur l'extrémité libre.

13. Unité modulaire de coupelle de commande de vitesses (1) selon l'une quelconque des revendications précédentes, **caractérisée en ce que** le boîtier de coupelle de commande de vitesses (5) présente une ouverture d'accouplement pour l'accouplement à un boîtier de transmission, l'étendue en surface de l'ouverture d'accouplement et l'étendue longitudinale de l'arbre de changement de vitesses (4) étant orientées dans le même sens.

14. Procédé de fixation d'un dispositif de palier (16) dans une unité modulaire de coupelle de commande de vitesses (1) selon l'une quelconque des revendications précédentes, **caractérisé en ce que** dans une première étape, le dispositif de palier (16) est introduit dans la portion de réception (14, 15), en particulier par pressage, dans une étape supplémentaire, l'élément de retenue (23, 28) est introduit dans la fixation (17, 27), et finalement l'arbre de changement de vitesses (4) est monté.
